# FASCICULE DE BREVET EUROPEEN

(11) **EP 2 605 952 B1**
(45) Date de publication et mention de la délivrance du brevet: **14.12.2016**
(21) Numéro de dépôt: 11743063.7
(22) Date de dépôt: 10.08.2011
(51) Int. Cl.: B62J 6/02, B60Q 1/12

(54) **PHARE FRONTAL POUR VÉHICULE À DEUX ROUES**
SCHEINWERFER FÜR ZWEIRADFAHRZEUG
HEADLIGHT FOR TWO-WHEELED VEHICLE

(30) Priorité: 18.08.2010 FR 1056641
(43) Date de publication de la demande: 26.06.2013
(73) Titulaire: Quality Electronics Design S.A., 6478 Echternach (LU)
(72) Inventeur: HAEST, Benedictus, B-3053 Haasrode (BE)
(74) Mandataire: Gaillarde, Frédéric F. Ch.
(86) Numéro de dépôt international: PCT/EP2011/063739
(87) Numéro de publication internationale: WO 2012/022658

(56) Documents cités:
- FR-A1- 2 844 759
- JP-A- 3 125 640
- NL-C2- 1 034 984

## Description

La présente invention se rapporte à un phare frontal pour véhicule à deux roues, notamment une moto, ainsi qu'à un tel véhicule à deux roues équipé d'un tel phare frontal.

Les phares de moto sont conçus pour répondre à des standards de sécurité lorsque la moto se déplace en ligne droite et est maintenue sensiblement à la verticale de la route.

Lorsque la moto aborde un virage, le pilote tourne le guidon et penche la moto. Il s'ensuit que le phare n'est plus dirigé dans une direction optimale. L'éclairage de la route dans la direction vers laquelle se dirige la moto s'en trouve grandement réduit, ce qui représente un danger évident notamment la nuit où le champ de vision de pilote s'en trouve extrêmement réduit, et ne facilite pas l'anticipation de la trajectoire (fin du virage, véhicules arrivant dans l'autre sens, des obstacles, des trous, etc....).

Ce problème est bien connu et les constructeurs ont cherché à développer de nombreuses solutions permettant d'optimiser l'orientation du phare frontal en fonction de la direction prise par la moto.

On connaît notamment des systèmes d'illumination frontale à trois phares comprenant un phare central, conçu pour illuminer la route lorsque la moto est droite et deux phares latéraux, situés de part et d'autre du phare central, et conçus pour illuminer la route lorsque la moto est penchée, le phare du côté où la moto est penchée s'allumant pour venir compléter la zone d'illumination du phare central. On connaît également des systèmes d'orientation manuels (JP03-125640).

Bien évidemment, un tel système ne tient pas précisément compte de l'angle d'inclinaison de la moto et est basé sur un angle d'inclinaison moyen au coeur d'un virage type.

Les constructeurs ainsi que des instituts/universités ont donc mené de nombreuses études pour développer des phares dynamiquement orientables à l'aide d'actionneurs en fonction de l'angle d'inclinaison de la moto et éventuellement d'autre paramètre. Il convient de noter qu'il n'existe pas à l'heure actuelle de solution commerciale et les solutions actuelles reposent plutôt sur des jeux de miroirs ou de masquent orientables.

Outre l'encombrement relatif des moyens d'actionnement du phare et leur contrôle, un problème majeur de ce type de système est la mesure de ces paramètres en temps réel et notamment la mesure de l'angle d'inclinaison de la moto.

Classiquement, on utilise un capteur gyroscopique pour mesurer l'inclinaison de la moto et en déduire la correction à appliquer à l'orientation du phare.

Les développements technologiques récents ont permis l'introduction de capteurs accéléromètre et gyroscopique MEMS, meilleur marché et plus fiables. La partie mécanique d'orientation du phare reste toutefois relativement complexe, ce qui constitue une source potentielle de nombreuses pannes et défaillances du système, limitant la mise en oeuvre pratique de tels produits.

Pour plus d'informations sur la mesure de l'angle d'inclinaison, on pourra se reporter, entre autres, aux articles suivants :
- On Navigation Systems for Motorcycles : The influence and Estimation of Roll Angle (2005) - USA, Department of Mechanical Engineering, University of California. THE JOURNAL OF NAVIGATION (2005), 58, 375-388.
- A Study on Motorcycle AFS Visibility and Glare (59th GRE, 31 Mars - 4 Avril 2008) - Japon.
- Corner Adapting Motorcycle Headlight, MIM 1501-1502. Technical Design Report (May 29, 2002) Department of Mechanical, Industrial and Manufacturing Engineering, College of Engineering, Northeastern University, Boston, MA 02115.

Il a également été constaté que l'angle de correction du phare doit être au plus égale à l'angle d'inclinaison du véhicule à deux roues, et plutôt légèrement inférieur.

Ainsi, pour rendre le phare à nouveau horizontal dans un virage, il faut lui appliquer une rotation autour d'une direction d'éclairage et d'avancement du véhicule d'un angle sensiblement égal à l'angle d'inclinaison de la moto et en tout cas y rester inférieur.

Il s'agit de la recommandation de l'étude japonaise précédemment mentionnée pour des conditions de vitesses comprises entre 30 et 60 km/h et des rayons de virage de 30 à 140m.

L'étude ne fait toutefois pas mention d'une correction de la direction des faisceaux lumineux dans le plan horizontal, notamment en orientant le phare légèrement vers l'intérieur du virage afin de mieux éclairer la portion de route vers laquelle le motard se dirige, et suggère qu'une seule action sur l'inclinaison suffit.

Il est toutefois possible dans de nombreux cas, et même à vitesse réduite, que l'angle d'inclinaison soit beaucoup plus important, notamment supérieur à 40°, et qu'une correction de direction dans le plan horizontal significative soit nécessaire.

Cette correction de direction doit donc pouvoir être effectuée simultanément à la correction d'inclinaison du phare. On notera qu'une correction du tangage peut également être nécessaire.

Il s'ensuit de manière générale la conception de moyens de correction d'éclairage particulièrement complexes, relativement encombrants, et, par voie de conséquence, relativement couteux. Il s'ensuit que de tels systèmes ne peuvent que difficilement être intégrés à des véhicules à deux roues plus modestes tels que scooters, mobylettes, motos d'entrée de gamme etc ...

On notera également que les systèmes d'actionnement actuels dépendent généralement du type de phare utilisé (elliptique, parabolique,...) et qu'il existe un besoin pour un système adaptable aisément à tout type de phare.

La présente invention vise à proposer un phare orientable bénéficiant d'un système mécanique plus simple et plus fiable.

Pour ce faire, la présente invention se rapporte à un véhicule à deux roues ou véhicule de type scooter à trois roues, le véhicule comprenant un phare frontal comprenant au moins une source de lumière associée à au moins un réflecteur conçu pour refléter la lumière depuis la source de lumière dans une direction d'avancement du véhicule, le phare possédant un axe de rotation autour duquel il est apte à pivoter, ledit axe étant orienté, lorsque le phare est dans une position de référence correspondant à une position dans laquelle le véhicule est sensiblement vertical et non incliné, dans un plan longitudinal sensiblement médian et vertical du phare, ledit axe de rotation étant par ailleurs incliné par rapport à la direction verticale, caractérisé en ce qu'il comprend au moins un actionneur apte à entraîner le phare en rotation autour de son axe.

Ainsi, en prévoyant un phare possédant un axe de rotation situé dans un plan longitudinal sensiblement médian du phare et incliné par rapport à la direction verticale, une rotation du phare autour de cet axe entraînera une correction simultanée de l'angle d'inclinaison du véhicule et de la direction de projection de la lumière. L'association à des moyens d'entraînement permet en outre un pilotage précis du phare, notamment par un contrôleur associé à des capteurs.

L'angle d'inclinaison de l'axe de rotation est compris entre 20 et 45 degrés.

Préférentiellement, l'angle d'inclinaison de l'axe de rotation est sensiblement égal à 45°.

En effet, avec un axe de rotation principal incliné sensiblement à 45°, les corrections apportées à l'inclinaison et à la direction de projection de la lumière sont sensiblement identiques. Une variation de l'angle de l'axe de rotation principale permettra de définir une relation de correction simultanée appropriée et optimale pour ces deux angles selon le véhicule concerné.

On notera également que la correction peut s'effectuer avec un seul actionneur et avec une amplitude relativement modeste. La construction du phare et son contrôle s'en trouvent donc grandement simplifiés et le coût final réduit.

Le phare frontal possède un deuxième axe de rotation autour duquel il est apte à pivoter, ledit deuxième axe de rotation étant orienté, lorsque le phare est dans sa position de référence, dans un plan sensiblement médian du phare sensiblement horizontal et selon une direction sensiblement transversale à la direction de projection de la lumière. La possibilité de rotation autour de ce deuxième axe permet une éventuelle correction du tangage si nécessaire.

De manière avantageusement complémentaire, le phare frontal possède un troisième axe de rotation autour duquel il est apte à pivoter, ledit troisième axe de rotation étant orienté, lorsque le phare est dans sa position de référence, selon une direction sensiblement verticale du phare.

Préférentiellement, le phare frontal comprend au moins un moyen d'entraînement en rotation du phare autour du deuxième et/ou troisième axe de rotation.

De manière avantageuse, les moyens d'entraînement en rotation autour des axes sont des actionneurs rotatifs et/ou linéaires à faible amplitude, préférentiellement rotatifs. Les actionneurs rotatifs sont moins coûteux et plus fiables.

De manière complémentaire, le phare frontal comprend au moins un diaphragme. Plus précisément, il pourra s'agir d'un phare de route ou de croisement ou les deux par l'intermédiaire dudit diaphragme.

Le phare frontal comprend au moins un microcontrôleur apte à commander le ou les actionneurs en fonction de paramètres d'entrée tels que la vitesse du véhicule et l'angle d'inclinaison dudit véhicule.

Alternativement, ce microcontrôleur et les capteurs pourront appartenir au véhicule.

Selon des variantes de réalisation, le phare comprend au moins un capteur gyroscopique et / ou au moins un inclinomètre.

On notera également que le phare pourra être indifféremment de type elliptique ou parabolique.

La présente invention sera mieux comprise à la lumière de la description détaillée qui suit en regard du dessin annexé dans lequel :
- la figure 1 est une représentation schématique d'une moto inclinée dans un virage avec son repère tridimensionnel associé,
- la figure 2 est une représentation schématique d'un phare et de ses axes de correction,
- la figure 3 est une vue d'ensemble des axes d'orientation du phare de la figure 2,
- les figures 4 à 7 montrent des exemples de réalisation de phares,
- la figure 8 est une représentation schématique d'une chaîne de contrôle d'un phare selon l'invention.

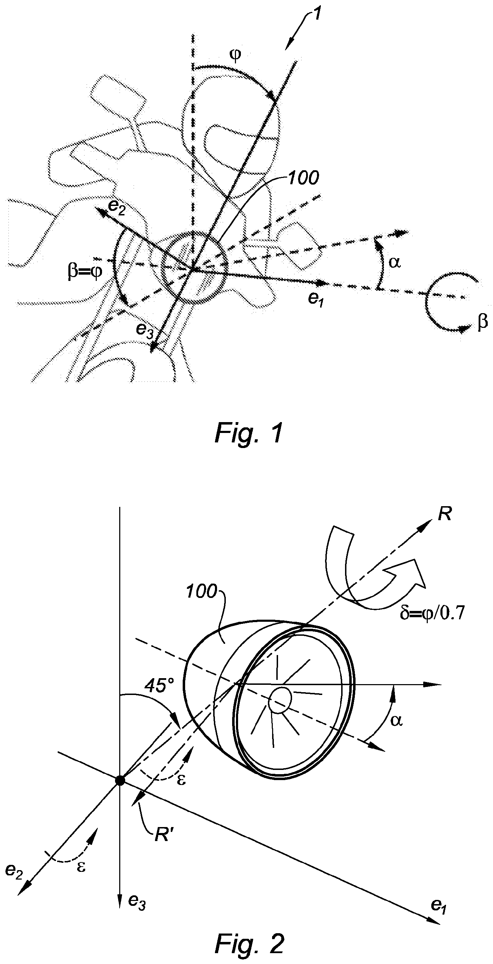

La figure 1 est une vue partielle d'une moto 1 équipée d'un phare frontal 100 selon l'invention. La moto 1 est inclinée dans un virage et un repère tridimensionnel associé {e1, e2, e3} a été représenté en pointillés et en traits pleins, correspondant respectivement au repère lorsque la moto 1 est droite et lorsque la moto 1 est inclinée.

L'axe e1 correspond à une direction d'avancement de la moto, et n'est donc pas modifié par l'inclinaison. En revanche, il représente également la direction de projection de la lumière du phare, direction qui, dans un virage, devrait être corrigée d'un angle α.

L'axe e2 correspond à une direction transversale à la moto 1. Lorsque la moto 1 est droite, l'axe e2 correspond sensiblement à une direction horizontale. Lorsque la moto 1 est inclinée dans un virage l'axe e2 subit une rotation d'un angle β autour de l'axe e1.

L'axe e3 correspond à une direction sensiblement verticale lorsque la moto 1 est droite. Lorsque la moto 1 est inclinée dans un virage, l'axe e3 est incliné d'un angle ϕ (angle de roulis).

La figure 2 est une vue détaillée du phare 100 et des axes précédemment définis sur laquelle ont été également marquées les corrections nécessaires conformément à l'invention.

Comme expliqué précédemment, il est recommandé que la correction de compensation apportée au phare selon l'angle β soit sensiblement égale à l'angle d'inclinaison ϕ de la moto 1, voire légèrement inférieure. Une correction selon l'angle α est également nécessaire.

Afin de procéder simplement et efficacement aux corrections nécessaires et conformément à l'invention, le phare 100 possède un axe de rotation R (flèche épaisse) incliné par rapport à l'axe e3 vertical. En l'espèce, l'axe R est incliné de 45° par rapport à e3.

En effectuant une rotation du phare autour de l'axe R selon un angle δ, une compensation sera effectuée à la fois sur les angles α et δ.

On notera qu'avec un axe de rotation R du phare 100 incliné à 45°, les corrections apportées seront les angles α et β seront identiques.

Une modification de l'inclinaison de l'axe de rotation R du phare 100 permettra de changer ce ratio de correction entre β et α en fonction du véhicule considéré pour obtenir une correction optimale.

En l'espèce, l'angle δ est calculé tel que 5 = ϕ / 0,7 (dans ce cas), avec un axe de rotation R incliné de 45°, α = β = ϕ) et un seul actionneur, de préférence rotatif, permet d'effectuer cette double correction.

Il est également intéressant de tenir compte du tangage du véhicule 1 et de le corriger. En effet, lorsque la moto 1 est inclinée, la hauteur du phare 100 par rapport au sol se réduit. Il en résulte que la partie du trajet illuminé devant la moto 1 est également réduite et il convient de corriger ce tangage. En outre, la distance entre la moto et l'endroit à illuminer dépend fortement de la courbure (radius) du virage et de la vitesse de la moto.

Pour ce faire, le phare 100 possède un deuxième axe de rotation R', sensiblement parallèle à e2 et passant par une intersection de l'axe rotatif R avec une ligne de centre du phare sensiblement parallèle à e1, autour duquel il sera pivoté d'un angle ε de compensation.

De manière générale, une telle correction reste limitée et un actionneur rotatif ou linéaire à faible amplitude pourra être utilisé.

En fonction de l'encombrement et de la place disponible, l'actionneur de correction du tangage pourra être disposé sur une structure de la moto 1 ou dans le phare 100 lui-même.

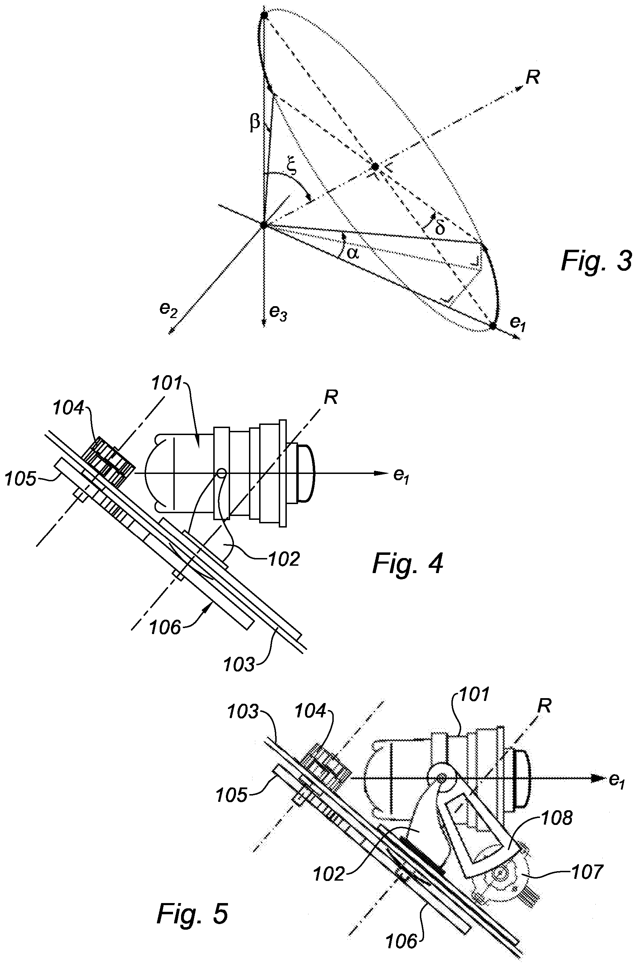

L'ensemble des axes et angles de correction est montré sur la figure 3 sans le phare 100.

Les figures 4 à 7 montrent des exemples de réalisation de phares.

La figure 4 montre un premier exemple de réalisation d'un phare 101 selon l'invention avec un axe de rotation R incliné de 40°.

Le phare 101 est tenu par un pied 102 monté en rotation sur une platine 103 tel que l'axe de rotation R soit incliné de 40° par rapport à la verticale.

La platine 103 supporte des moyens d'entraînement du pied 102, et donc du phare 101, en rotation autour de l'axe R.

Ces moyens d'entraînement comprennent un actionneur rotatif 104 possédant un axe apte à entraîner une roue dentée 105 s'engrenant en rotation avec une roue dentée 106 du pied 102.

Bien évidemment, toute solution alternative d'entraînement est possible, notamment un entraînement par courroie par exemple.

La figure 5 montre le phare de la figure 4 sur lequel une correction du tangage est prévue. Pour ce faire, le phare 101 est associé à un deuxième actionneur rotatif 107 apte à entraîner en rotation un bras denté 108 permettant de faire basculer le phare 101 autour d'un axe transversal.

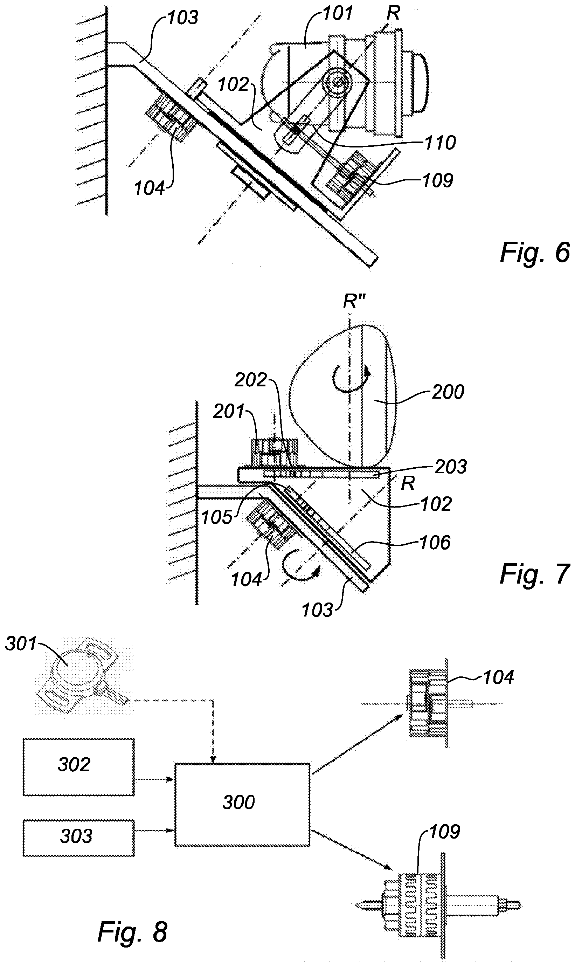

La figure 6 montre une variante de réalisation dans laquelle un actionneur linéaire 109 à faible amplitude tire ou repousse un bras 110 associé également de manière à faire basculer le phare 101 autour d'un axe transversal.

On notera qu'un avantage principal de la correction du tangage est de pouvoir compenser un changement de la zone d'éclairage qui serait due à la modification de l'assiette du véhicule en cas de freinage ou d'accélération, notamment.

La figure 7 montre un autre exemple de réalisation d'un phare dans lequel le phare 200 possède un troisième axe de rotation R" autour duquel il est apte à pivoter, ledit troisième axe de rotation R" étant orienté, lorsque le phare est dans sa position de référence, dans un plan sensiblement médian du phare sensiblement vertical et selon une direction sensiblement verticale.

L'exemple de la figure 7 ne montre qu'un réglage autour du premier et troisième axe, l'angle de tangage n'étant pas corrigé. Cela reste toutefois possible.

Le phare 200 est entraîné en rotation autour de cet axe R" par un actionneur rotatif 201 et des roues d'entraînement 202, 203, montés sur le pied 102 du phare 200.

Ce troisième axe de rotation R" permet, en plus des autres axes de rotation R et R', une correction dans toutes les directions. Notamment sur l'exemple représenté, une correction à la fois de l'inclinaison (ϕ) et de la direction du faisceau lumineux (α) est permise.

La figure 8 montre schématiquement l'arrangement d'une chaîne de contrôle d'un phare selon l'invention.

Ce système de contrôle est construit autour d'un micro contrôleur 300 apte à recevoir des valeurs de vitesse, et d'inclinaison à partir d'un capteur MEMS gyroscopique 302, d'un inclinomètre 301 et d'un capteur de vitesse 303.

Il convient de noter que les seules informations dont le microprocesseur du contrôleur a besoin sont la vitesse et les taux des angles de rotation. L'inclinomètre est utilisé lorsque la vitesse de la moto est nulle et il ne fonctionne pas lorsque la moto roule. En revanche, il est utilisé pour corriger l'angle d'inclinaison lorsque la moto se penche en arrêt (signal tricolore au rouge ou autre par exemple).

Le taux de lacet, taux de roulis, éventuellement taux de tangage et la vitesse sont ainsi fournis au micro contrôleur 300 comme paramètres pour que ce dernier calcule et envoie en sortie les ordres de commande appropriés aux actionneurs 109 et 104 de correction.

Bien évidemment, cette chaîne de contrôle est donnée uniquement à titre d'exemple et doit être adapté en fonction du phare selon l'invention utilisé et des paramètres nécessaires à la détermination des corrections.

De manière connue, l'intégration du taux de roulis permet d'obtenir l'angle d'inclinaison ϕ du véhicule. Cette intégration risque toutefois d'ajouter une erreur croissante dans le temps et l'angle ϕ pourra être calibré par le taux de lacet et la vitesse et/ ou par le signal absolu de l'inclinomètre 301.

Grâce à l'angle d'inclinaison ϕ, on pourra calculer le rayon de courbure du virage et déterminer, grâce à la vitesse du véhicule, la correction idéale selon l'angle α.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Véhicule (1) à deux roues, notamment une moto, ou véhicule de type scooter à trois roues, le véhicule comportant un phare frontal (100, 200) comprenant au moins une source de lumière (101) associée à au moins un réflecteur conçu pour refléter la lumière depuis la source de lumière dans une direction d'avancement du véhicule (e1), le phare possédant un axe de rotation (R) autour duquel il est apte à pivoter, ledit axe étant orienté, lorsque la phare est dans une position de référence correspondant à une position dans lequel le véhicule est sensiblement vertical et non incliné, dans un plan longitudinal (e1, e3) sensiblement médian et vertical du phare, ledit axe de rotation étant par ailleurs incliné par rapport à la direction verticale, **caractérisé en ce qu'**il comprend au moins un actionneur (104) apte à entraîner le phare en rotation autour de l'axe de rotation (R), l'angle d'inclinaison de l'axe de rotation (R) étant compris entre 20 et 45 degrés ;
le phare comportant en outre un deuxième axe de rotation (R') autour duquel il est apte à pivoter, ledit deuxième axe de rotation étant orienté, lorsque le phare est dans sa position de référence, dans un plan sensiblement médian du phare sensiblement horizontal (e1, e2) et selon une direction sensiblement transversale (e2) à la direction de projection de la lumière (e1) ;
le véhicule (1) comportant au moins un micro contrôleur (300) apte à commander le ou les actionneurs (104, 109) en fonction de paramètres d'entrée tels que la vitesse (303) du véhicule et l'angle d'inclinaison (301, 302) dudit véhicule (1).

2. Véhicule (1) selon la revendication 1, **caractérisé en ce que** l'angle d'inclinaison de l'axe de rotation (R) est sensiblement égal à 45 degrés.

3. Véhicule (1) selon l'une quelconque des revendications 1 et 2, **caractérisé en ce que** le phare frontal (200) possède un troisième axe (R") de rotation autour duquel il est apte à pivoter, ledit troisième axe de rotation étant orienté, lorsque le phare est dans sa position de référence, selon une direction sensiblement verticale du phare (e3).

4. Véhicule (1) selon l'une quelconque des revendications 1 à 3, **caractérisé en ce qu'**il comprend au moins un moyen d'entraînement (107, 108, 109, 110, 201, 202) en rotation du phare autour du deuxième (R') et / ou troisième (R") axe de rotation.

5. Véhicule (1) selon l'une quelconque des revendications 1 à 4, **caractérisé en ce qu'**au moins une partie des actionneurs et/ou moyens d'entraînement en rotation autour des axes sont des actionneurs rotatifs (104, 107, 201) et/ou linéaires (109) à faible amplitude, préférentiellement rotatifs.

6. Véhicule (1) selon l'une des revendications précédentes, **caractérisé en ce qu'**il comprend au moins un capteur gyroscopique.

7. Véhicule (1) selon l'une quelconque des revendications précédentes, **caractérisé en ce qu'**il comprend au moins un inclinomètre.

## Patentansprüche

1. A two-wheeled vehicle (1), in particular a motorcycle, or a threewheeled scooter type vehicle, the vehicle including a front headlight (100, 200) comprising at least one light source (101) associated with at least one reflector designed to reflect light from the light source in an advance direction of the vehicle (e1), the headlight having an axis of rotation (R) about which it is able to pivot, said axis being oriented, when the headlight is in a reference position corresponding to a position in which the vehicle is substantially vertical and not tilted, in a longitudinal plane (e1, e3) substantially median and vertical of the headlight, said axis of rotation being furthermore tilted with respect to the vertical direction, **characterized in that** it comprises at least one actuator (104) able to drive the headlight in rotation about the axis of rotation (R), the tilt angle of the axis of rotation (R) being comprised between 20 and 45 degrees;
the headlight further including a second axis of rotation (R) about which it is able to pivot, said second axis of rotation being oriented, when the headlight is in its reference position, in a substantially median plane of the substantially horizontal lighthouse (e1, e2) and according to a direction substantially transverse (e2) to the light projection direction (e1);
the vehicle (1) including at least one micro controller (300) able to control the actuator(s) (104, 109) based on input parameters such as the speed (303) of the vehicle and the tilt angle (301, 302) of said vehicle (1).

2. The vehicle (1) according to claim 1, **characterized in that** the tilt angle of the axis of rotation (R) is substantially equal to 45 degrees.

3. The vehicle (1) according to any one of claims 1 and 2, **characterized in that** the front headlight (200) has a third axis of rotation (R") about which it is able to pivot, said third axis of rotation being oriented, when the headlight is in its reference position, according a substantially vertical direction of the headlight (e3).

4. The vehicle (1) according to any one of claims 1 to 3, **characterized in that** it comprises at least one means for driving (107, 108, 109, 110, 201, 202) in rotation the headlight about the second (R') and/or third (R") axis of rotation.

5. The vehicle (1) according to any one of claims 1 to 4, **characterized in that** at least one portion of the actuators and/or drive means in rotation about the axes are rotating (104, 107, 201) and/or linear (109), preferably rotating, actuators with low amplitude.

6. The vehicle (1) according to any of the preceding claims, **characterized in that** it comprises at least one gyroscopic sensor.

7. The vehicle (1) according to any one of the preceding claims, **characterized in that** it comprises at least one inclinometer.

## Claims

1. Zweirädriges Fahrzeug (1), insbesondere ein Motorrad, oder Fahrzeug vom Typ dreirädriger Motorroller, wobei das Fahrzeug einen Frontscheinwerfer (100, 200) umfasst, der zumindest eine Lichtquelle (101) enthält, die zumindest einem Reflektor zugeordnet ist, der gestaltet ist, um das Licht aus der Lichtquelle in eine Fortbewegungsrichtung des Fahrzeugs (e1) zu reflektieren, wobei der Scheinwerfer eine Rotationsachse (R) besitzt, um die er schwenkbar ist, wobei die besagte Achse orientiert wird, wenn sich der Scheinwerfer in einer Referenzposition befindet, die einer Position entspricht, in der das Fahrzeug im Wesentlichen vertikal und nicht geneigt, in einer im Wesentlichen medianen und vertikalen Längsebene (e1, e3) des Scheinwerfers ist, wobei die besagte Rotationsachse darüber hinaus im Verhältnis zur vertikalen Richtung geneigt ist, **dadurch gekennzeichnet, dass** es zumindest einen Steller (104) umfasst, der imstande ist, den Scheinwerfer in Rotation um die Rotationsachse (R) zu versetzen, wobei der Neigungswinkel der Rotationsachse (R) zwischen 20 und 45 Grad liegt;
wobei der Scheinwerfer darüber hinaus eine zweite Rotationsachse (R') umfasst, um die er schwenkbar ist, wobei die besagte zweite Rotationsachse orientiert wird, wenn sich der Scheinwerfer in seiner Referenzposition in einer im Wesentlichen medianen Ebene des im Wesentlichen horizontalen Scheinwerfers (e1, e2) befindet, und in eine im Wesentlichen transversale Richtung (e2) zur Projektionsrichtung des Lichts (e1);
wobei das Fahrzeug (1) zumindest einen Mikrocontroller (300) umfasst, der imstande ist, den oder die Steller (104, 109) in Abhängigkeit von Eingangsparametern, wie der Geschwindigkeit (303) des Fahrzeugs und dem Neigungswinkel (301, 302) des besagten Fahrzeugs (1) zu steuern.

2. Fahrzeug (1) nach Anspruch 1, **dadurch gekennzeichnet, dass** der Neigungswinkel der Rotationsachse (R) im Wesentlichen gleich 45 Grad ist.

3. Fahrzeug (1) nach einem der Ansprüche 1 und 2, **dadurch gekennzeichnet, dass** der Frontscheinwerfer (200) eine dritte Rotationsachse (R") besitzt, um die er schwenkbar ist, wobei die besagte dritte Rotationsachse orientiert wird, wenn sich der Scheinwerfer in seiner Referenzposition gemäß einer im Wesentlichen vertikalen Richtung des Scheinwerfers (e3) befindet.

4. Fahrzeug (1) nach einem der Ansprüche 1 bis 3, **dadurch gekennzeichnet, dass** es zumindest ein Antriebsmittel (107, 108, 109, 110, 201, 202) für die Rotation des Scheinwerfers um die zweite (R') und/oder um die dritte (R") Rotationsachse umfasst.

5. Fahrzeug (1) nach einem der Ansprüche 1 bis 4, **dadurch gekennzeichnet, dass** zumindest ein Teil der Steller und/oder der Antriebsmittel für die Rotation um die Achsen Rotationssteller (104, 107, 201) und/oder Linearsteller (109) mit kleiner Amplitude, vorzugsweise Rotationssteller sind.

6. Fahrzeug (1) nach einem der vorherigen Ansprüche, **dadurch gekennzeichnet, dass** es zumindest einen Gyrosensor umfasst.

7. Fahrzeug (1) nach einem der vorherigen Ansprüche, **dadurch gekennzeichnet, dass** es zumindest einen Neigungsmesser umfasst.
